# EUROPEAN PATENT SPECIFICATION

(11) **EP 3 152 862 B1**
(45) Date of publication and mention of the grant of the patent: **06.03.2019**
(21) Application number: 14728969.8
(22) Date of filing: 06.06.2014
(51) Int. Cl.: H04W 4/24, H04L 12/14, H04M 15/00

(54) **NOTIFICATION OF NETWORK EVENTS RELEVANT FOR POLICY AND CHARGING DECISIONS**
BENACHRICHTIGUNG ÜBER POLICY- UND CHARGING-RELEVANTE NETZEREIGNISSE
NOTIFICATION D'ÉVÉNEMENTS DE RÉSEAU PERTINENTS POUR LA PRISE DE DÉCISIONS DES RÈGLES D'ACCÈS ET DE FACTURATION

(43) Date of publication of application: 12.04.2017
(73) Proprietor: Telefonaktiebolaget LM Ericsson (publ), 164 83 Stockholm (SE)
(72) Inventor: CASTRO CASTRO, Fabian, ES-15178 Arillo/Oleiros/A Coruña (ES); FERNANDEZ ALONSO, Susana, ES-28009 Madrid (ES)
(74) Representative: Ericsson
(86) International application number: PCT/EP2014/061855
(87) International publication number: WO 2015/185157

(56) References cited:
- WO-A1-2011/101063
- WO-A1-2013/053896
- WO-A1-2014/005636
- US-A1- 2013 176 908
- TEKELEC ET AL: "Discussion paper on Usage-reporting from PCRF to OCS over Sy", 3GPP DRAFT; S2-113302_SY_THE_THER_DIRECTION_DISC_PAPER , 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Naantali; 20110711, 5 July 2011 (2011-07-05), XP050548588, [retrieved on 2011-07-05]

## Description

### Technical field

The invention relates to methods and apparatus for notification of network events to an Online Charging System (OCS) in a telecommunications network.

### Background

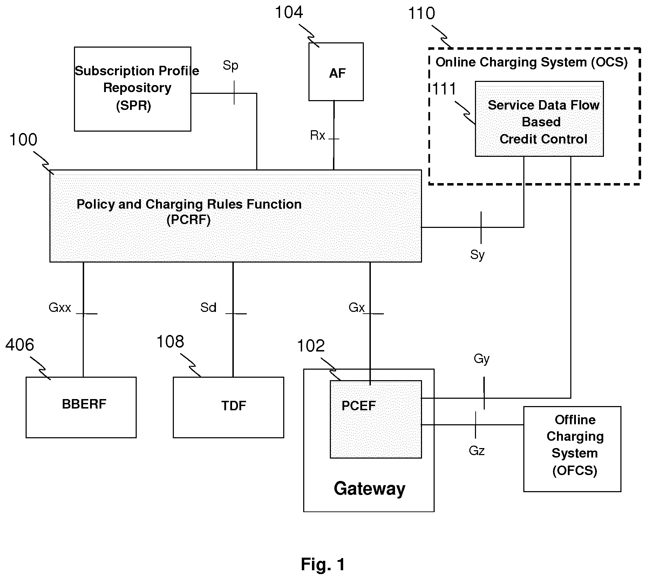

The architecture that supports Policy and Charging Control (PCC) functionality is depicted in Figure 1, which has been taken from Third Generation Partnership Protocol (3GPP) TS 23.203 (v12.4.0), which specifies the PCC functionality for Evolved 3GPP Packet Switched domain, including both 3GPP accesses and Non-3GPP accesses.

The Policy and Charging Rules Function (PCRF) 100 is a functional element that encompasses policy control decision and flow based charging control functionalities. The PCRF provides network control regarding the service data flow detection, gating, Quality of Service (QoS) and flow based charging (except credit management) towards the Policy and Charging Enforcement Function (PCEF) 102. The PCRF 100 receives session and media related information from the Application Function (AF) 104 and informs AF 104 of traffic plane events.

The PCRF 100 provides PCC Rules to the PCEF 102 via the Gx reference point and may provide QoS Rules to the Bearer Binding and Even Reporting Function (BBERF) 106 via the Gxx reference point (for deployments based on Proxy Mobile Internet Protocol Version 6 (PMIP)/Dual Stack Mobile Internet Protocol Version 6 (DSMIP) protocol in the core network).

The PCRF 100 shall inform the PCEF 102 through the use of PCC rules on the treatment of each service data flow that is under PCC control, in accordance with the PCRF policy decision(s).

The PCEF 102 encompasses service data flow detection (based on filters definitions included in the PCC rules), as well as online and offline charging interactions (not described here) and policy enforcement. Since the PCEF 102 is the node handling the bearers, it is where the QoS is being enforced for the bearer according to the QoS information coming from the PCRF 100.

3GPP Release 11 has introduced a new entity in the PCC Architecture, the Traffic Detection Function (TDF) 108, that is a Deep Packet Inspection (DPI) box that monitors the payload and detects when an application is initiated/terminated. This functionality can also reside in the PCEF 102.

The TDF 108 can perform solicited and unsolicited application reporting. For the solicited case, the PCRF 100 instructs the TDF 108 on which applications to detect and report to the PCRF 100 by activating the appropriate Application Detection and Control (ADC) rules. The PCRF 100 may instruct the TDF 108 (or PCEF 102) what enforcement actions to apply for the detected application traffic.

The AF 104 is an element offering applications in which service is delivered in a different layer (i.e. transport layer) from the one the service has been requested (i.e. signaling layer), the control of Internet Protocol (IP) bearer resources according to what has been negotiated. One example of an AF 104 is the Proxy Call Session Control Function (P-CSCF) of the IP Multimedia System Core Network (CN) subsystem. The AF 104 shall communicate with the PCRF 100 to transfer dynamic session information (i.e. description of the media to be delivered in the transport layer). This communication is performed using the Rx interface.

3GPP has defined also an Sy interface between PCRF 100 and an OCS 110, which comprises a Service Data Flow Based Credit Control unit (111). The Sy interface allows the PCRF 100 to perform policy control decisions (QoS, gating, redirection, etc.) based on spending limits (these limits can be based on time, volume or money) available in the OCS 110. This allows for example, subscriber plans with high QoS up to certain money limit per day and a lower QoS beyond that.

The Sy interface between the PCRF 100 and OCS 110 enables transport of indications from the OCS 110 to the PCRF 100.

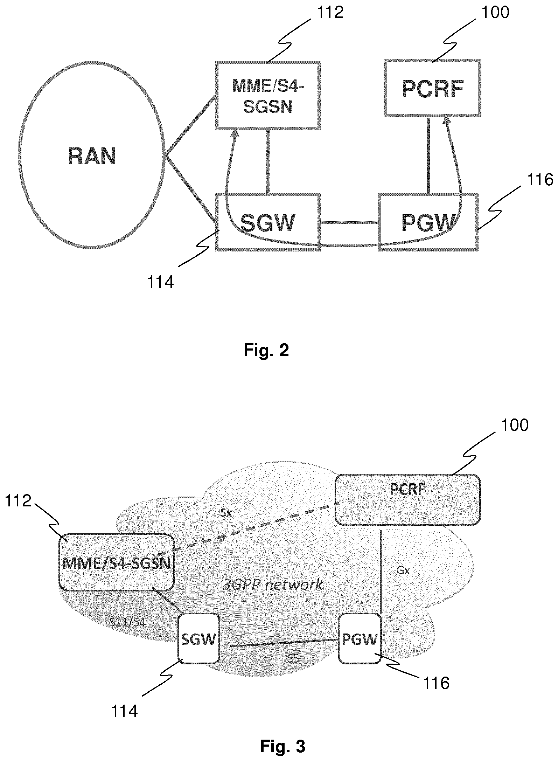

Figure 2 shows an architecture diagram of a telecommunications network. The existing architecture for the Evolved Packet Core imposes that all the access network information useful for the PCRF 100 to take decisions, such as location information or Radio Access Technology (RAT) type should be sent from the Mobility Management Entity (MME) / S4 Serving General Packet Radio Service Support Node (S4-SGSN) 112 to the Serving Gateway (SGw) 114 and Packet Data Network Gateway (PDN-Gw) 116 and then from the PDN-Gw 116 to the PCRF 100 via Gx interface. The PCRF 100 subscribes to event triggers in the PDN-Gw 116, to be informed every time occurs a change in the access network information.

The reporting of this kind of access network information can provoke an unnecessary signaling storm in the affected nodes, such as the SGw 114 and PDN-Gw 116, if these changes are only relevant for the PCRF 100. It is clear that the PCC architecture is inefficient in this respect and from a signaling point of view.

An example is related to location information. If the PCRF 100 requires to be informed about cell changes in order to take policy decisions, this would require signaling every cell change towards the SGw 114 and PDN-Gw 116. This provokes an unnecessary overload in SGw 114 and PDN-Gw 116. In fact, in real customer deployments, location updates through this channel are deactivated to avoid performance penalties in the packet core network, leaving in practice the PCRF 100 without the possibility of taking policy decisions based on location.

An existing Ericsson patent application, WO 2013/053896 A1, tries to solve this inefficient signaling by means of an interface between the PCRF 100 and the MME/SGSN 112, as shown in Figure 3.

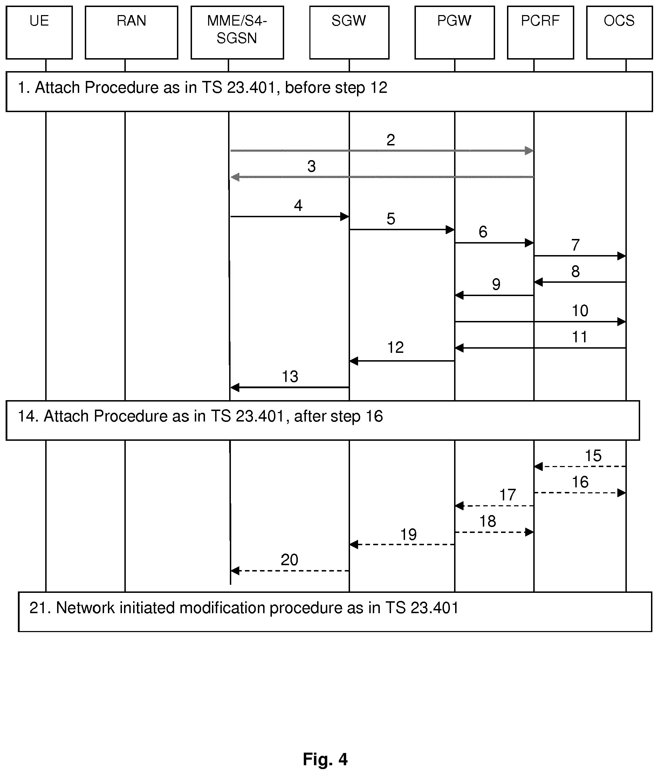

The signalling diagram of Figure 4 shows the Initial Attach procedure as specified in 3GPP TS 23.401 (v12.4.0) including the Sx interaction between MME/S4-SGSN 112 and PCRF 100 defined in WO 2013/053896 A1.
1. Initial attach is initiated up to step 12 in TS 23.401
2. The MME/S4-SGSN 112 initiates the new interface towards the PCRF 100 and includes at least the user equipment (UE) Identity, Packet Data Network (PDN) Identifier and Access Point Name (APN). The UE's identity and PDN Identifier requested are used to identify the subscriber and in PCRF 100 selection to locate the PCRF 100 function with the corresponding Internet Protocol Connectivity Access Protocol (IP-CAN) session established by the PDN-Gw 116. The MME/S4-SGSN 112 may provide additional parameters such as MME/S4-SGSN 112 capabilities and restriction, RAN capabilities and restriction, UE capabilities and restrictions or any other information that is available in the MME/S4-SGSN 112 that is relevant for this user and connection.
3. The PCRF 100 responds to the MME/S4-SGSN 112 session request. The PCRF 100 may subscribe to event notifications from the MME/S4-SGSN 112 at this point e.g. changes to cell-id, S1-connection status or any other information that is available in the MME/S4-SGSN 112 for this user.
4. The MME/S4-SGSN 112 sends Create Session Request as per normal procedures.
5. The SGw 114 send Create Session Request as per normal procedures.
6. The PDN-Gw 116 initiates a new Gx session as per normal procedures. The PCRF 100 correlates the Gx session with the Session Request from the MME/S4-SGSN 112.
7. The PCRF 100 initiates a Sy session towards the OCS 110 as per normal procedures.
8. The OCS 110 responds the Sy session including the counters information as per normal procedures.
9. The PCRF 100 responds the Gx session request as per normal procedures.
10. The PDN-Gw 116 sends a Gy Creation session request to the OCS 110 as per normal procedures.
11. The OCS 110 sends to the PDN-Gw 116 a Gy session creation response as per normal procedures. In this answer the OCS 110 subscribes to event triggers in the PDN-Gw 116, in order to be informed of access network information changes.
12. The PDN-Gw 116 sends a Create Session Response to the SGw 114 as per normal procedures.
13. The SGw 114 sends a Create Session Response to the MME/S4-SGSN 112 as per normal procedures.
14. The attach procedure continues after step 16 in TS 23.401. Any personalized parameters provided to the MME/S4-SGSN 112 from the PCRF 100 are applied and used internally in the MME/S4-SGSN 112 and in successive procedures of relevance.
15. The access network information received in step 10 from the PDN-Gw 116 may affect the counters status that OCS 110 communicates to the PCRF 100 via Sy. In that case the OCS 110 will initiate a reauthorization procedure towards the PCRF 100 indicating the new counter status.
16. The PCRF 100 upon reception of new counter status will initiate the policy evaluation
17. The PCRF 100 may download new policy information to the PDN-Gw 116 if any of the new counter status change the previous policy information.
18. Associated with step 17, the PDN-Gw 116 will acknowledge the policy changes.
19. The PDN-Gw 116 sends a Modification Session Request to the SGw 114 as per normal procedures
20. The SGw 114 sends a Modification Session Request to the MME/S4-SGSN 112 as per normal procedures.
21. Network initiated session modification will be propagated towards the RADIO and the terminal as normal procedures.

The existing patent application, WO 2013/053896 A1, proposes an interface between the MME/SGSN 112 and the PCRF 100, the Sx interface. The Sx interface has the purpose of optimizing the signaling towards the Enhanced Packet Core (EPC). The OCS 110, that is also part of the PCC architecture, may require to know the user location information, the Radio access type, the Public Land Mobile Network (PLMN) ID, or any other access network dynamic information that may affect the charging. According to 3GPP PCC architecture, the OCS 110 receives the access network information from the PDN-Gw 116 via Gy interface. The OCS 110 can subscribe or not to access network information changes by means of event triggers in the Gy, as depicted in step 11 in Figure 4.

This means that in some circumstances, when the OCS 110 subscribes to access network event triggers, like for example location change, or RAT-Type change, the information will be propagated from the MME-SGSN 112 to the PDN-Gw 116, and from the PDN-Gw 116 to the OCS 110 via the Gy interface.

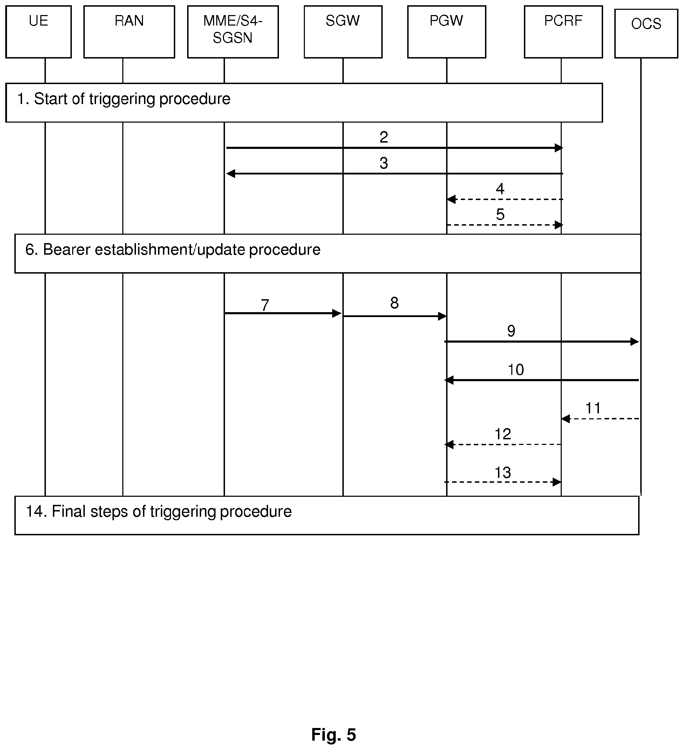

Figure 5 is a signaling diagram showing the process discussed above.
1. An event occurs at the MME/S4-SGSN 112 that matches an event that the PCRF 100 is subscribed to, e.g. a cell-id change or a RAT-Type change. The event may be triggered e.g. by a Tracking Area Update (TAU) or a Routing Area Update (RAU) procedure or by a handover procedure. Other events are possible.
2. The MME/S4-SGSN 112 initiates an intermediate request towards the PCRF 100 and includes the updated information.
3. The PCRF 100 acknowledges the MME/S4-SGSN 112 request
4. If the new information received in the PCRF 100 changes any of the policies applicable in the PDN-Gw 116 the PCRF 100 will send a Gx reauthorization message to the PDN-Gw 116 with the new policies
5. Associated with step 4, the PDN-Gw 116 answers the reauthorization message.
6. If the policies in step 4 requires a new bearer to be established or a current bearer to be updated (e.g. the QoS of the bearer is modified), the PCEF will initiate the procedures to do so.
7. The MME/S4-SGSN 112 initiates an intermediate request towards the SGw 114 and includes the updated information
8. The SGw 114 initiates an intermediate request towards the PDN-Gw 116 and includes the updated information
9. The PDN-Gw 116 initiates an intermediate request towards the OCS 110 and includes the updated information according to the event triggers subscribed by the OCS 110 in the PDN-Gw 116.
10. The OCS 110 acknowledges the PDN-Gw 116 request as per normal procedures with the new charging parameters if applicable.
11. If the status of any counter changes, the OCS 110 notifies the counter status to the PCRF 100 via Sy interface.
12. If the new counter information received in the PCRF 100 from the OCS 110 changes any of the policies applicable in the PDN-Gw 116 the PCRF 100 will send a Gx reauthorization message to the PDN-Gw 116 with the new policies
13. Associated with step 11 , the PDN-Gw 116 will answer the reauthorization message.
14. The sequence continues as normal procedures.

Note that the PDN-Gw 116 after step 7, does not initiate a reauthorization towards the PCRF 100, since the PCRF 100 has not subscribed to events in the PDN-Gw 116. However, it could be, depending on the PDN-Gw 116 implementation, that upon a reception of an intermediate request from the SGw 114, it cannot avoid sending a reauthorization towards the PCRF 100, independently of the event triggers information, increasing even more the signaling.

As can be seen in Figure 5, the Sx interface, proposed in the patent application WO 2013/053896 A1, does not avoid the overloading of SGw 114 and PDN-Gw 116 in situations where the OCS 110 also requires to be updated with the new network access information.

With this approach, steps 6, 7, 8 and 9 occur if any event subscribed to by the OCS 110 occurs, even if the information received does not produce any change from charging perspective. For example, the OCS 110 may subscribe to RAT-type change information because charging changes if user is connected to LTE access, but the network will report upon any RAT type change.

Besides, the PCRF 100 may initiate a double reauthorization towards the PDN-Gw 116 in step 4 upon reception of MME/S4-SGSN 112 information and in step 11 upon reception of counter status information from OCS 110. This is the consequence of a having two different channels to receive access network information changes. "Discussion paper on Usage-reporting from PCRF to OCS over Sy", Tekelec et al (3gpp draft) discloses usage-reporting from PCRF to OCS over Sy.

### Summary

Disclosed herein, to facilitate the understanding of the invention, is a network node for use in an Online Charging System in a telecommunications network, the Online Charging System storing charging information relating to service and/or charging for a user equipment. The node comprises an event determiner configured to determine one or more network events of which the node should be notified. The node comprises a subscription message determiner configured to determine a subscription message comprising data indicating the determined one or more network events, and configured to control a transmitter to transmit the subscription message to a further node for use as a Policy and Charging Rules Function. The node comprises a receiver configured to receive a notification from the further node that at least one of the one or more network events has occurred. The node comprises a charging information updater configured to update the charging information stored in the node based on the received notification.

Optionally, the receiver is further configured to receive network information relating to a user equipment in the telecommunications network, and wherein the event determiner is configured to determine the network events based on the received network information.

Optionally, the event determiner is configured to update the one or more network events based on the notification received from the further node.

Optionally, the subscription message determiner is further configured to determine an updated subscription message comprising data indicating the updated one or more network events and to control a transmitter to transmit the updated subscription message to the further node.

Optionally, the charging information updater is further configured to control the transmitter to transmit a message to the further node requiring that a second further node requests the updated charging information.

Optionally, the receiver is further configured to receive a request for the updated charging information from a second further node for use as a Packet Data Network Gateway, and wherein the charging information updater is configured to control the transmitter to transmit data indicating the updated charging information to the second further node.

Disclosed herein, to facilitate the understanding of the invention, is a method for operating a network node for use in an Online Charging System in a telecommunications network, the Online Charging System storing charging information relating to service and/or charging for a user equipment. The method comprises determining, by an event determiner, one or more network events of which the node should be notified. The method comprises determining, by a subscription message determiner, a subscription message comprising data indicating the determined one or more network events. The method comprises controlling a transmitter to transmit the subscription message to a further node for use as a Policy
and Charging Rules Function. The method comprises receiving, by a receiver, a notification from the further node that at least one of the one or more network events has occurred. The method comprises updating, by a charging information updater, the charging information stored in the node based on the received notification.

Optionally, the method further comprises receiving, by the receiver, network information relating to a user equipment in the telecommunications network, and wherein determining the network events, by the event determiner, is based on the received network information.

Optionally, the method further comprises updating, by the event determiner, the one or more network events based on the notification received from the further node.

Optionally, the method further comprises determining , by the subscription message determiner, an updated subscription message comprising data indicating the updated one or more network events and controlling a transmitter to transmit the updated subscription message to the further node.

Optionally, the method further comprises the charging information updater controlling the transmitter to transmit a message to the further node, the message indicating that a second further node requires the updated charging information.

Optionally, the method further comprises receiving, by the receiver, a request for the updated charging information from a second further node for use as a Packet Data Network Gateway, and the charging information updater controlling the transmitter to transmit data indicating the updated charging information to the second further node.

According to the invention in a first aspect, there is provided a network node for use as a Policy and Charging Rules Function in a telecommunications network. The node comprises a receiver configured to receive a first subscription message from a first further node for use in an online charging system, wherein the first subscription message comprises data indicating one or more first network events of which the first further node should be notified. The node comprises a charging subscription determiner configured to determine the first network events the first further node should be notified of from the received first subscription message. The node comprises a subscription message determiner configured to determine a second subscription message comprising data indicating the first network events of which the first further node should be notified, and further configured to control a transmitter to transmit the second subscription message to a second further node for use as a Mobility Management Entity/Serving General Packet Radio Service Support Node. The receiver is further configured to receive from the second further node a first notification indicating that at least one of the one or more first network events has occurred. The network node further comprises a notifier configured to control the transmitter to transmit to the first further node a second notification indicating that the at least one of the one or more first network events has occurred.

Optionally, the transmitter is further configured to transmit network information relating to a user equipment in the telecommunications network to the first further node.

Optionally, the network node further comprising a policy subscription determiner configured to determine one or more second network events of which the node should be notified.

Optionally, the subscription message determiner is configured to determine a third subscription message comprising data indicating the second network events of which the node should be notified and further configured to control a transmitter to transmit the third subscription message to the second further node.

Optionally, the second subscription message further comprises data indicating the second network events of which the node should be notified.

Optionally, the policy subscription determiner is configured to update the one or more second network events based on the first notification received from the second further node.

Optionally, the receiver is further configured to receive an updated first subscription message from the first further node in response to the second notification, the updated first subscription message comprising data indicating one or more updated first network events of which the first further node should be notified, and wherein the charging subscription determiner is configured to determine the updated first network events the first further node should be notified of from the received updated first subscription message, and the subscription message determiner is configured to determine an updated second subscription message comprising data indicating the updated first network events of which the first further node should be notified and further configured to control a transmitter to transmit the updated second subscription message to the second further node.

Optionally, the receiver is further configured to receive from the first further node data indicating that a third further node should request updated charging information for the user equipment, the node further comprising a subscription manager configured to control the transmitter to transmit an instruction to a third further node for use as a Packet Data Network Gateway to request the updated charging information from the first further node.

According to the invention in another aspect, there is provided a method for operating a network node for use as a Policy and Charging Rules Function in a telecommunications network. The method comprises receiving, by a receiver, a first subscription message from a first further node for use in an online charging system, wherein the first subscription message comprises data indicating one or more first network events of which the first further node should be notified. The method comprises determining, by a charging subscription determiner, the first network events the first further node should be notified of from the received first subscription message. The method comprises determining, by a subscription message determiner, a second subscription message comprising data indicating the first network events of which the first further node should be notified and controlling a transmitter to transmit the second subscription message to a second further node for use as a Mobility Management Entity/Serving General Packet Radio Service Support Node. The method comprises receiving, by the receiver, from the second further node a first notification indicating that at least one of the one or more first network events has occurred. The method comprises controlling, by a notifier, the transmitter to transmit to the first further node a second notification indicating that the at least one of the one or more first network events has occurred.

Optionally, the method further comprises the transmitter transmitting network information relating to a user equipment in the telecommunications network to the first further node.

Optionally, the method further comprises determining, by a policy subscription determiner, one or more second network events of which the node should be notified.

Optionally, the method further comprises the subscription message determiner determining a third subscription message comprising data indicating the second network events of which the node should be notified and controlling a transmitter to transmit the third subscription message to the second further node.

Optionally, the second subscription message further comprises data indicating the second network events of which the node should be notified.

Optionally, the method further comprises the policy subscription determiner updating the one or more second network events based on the first notification received from the second further node.

Optionally, the method further comprises receiving, by the receiver, an updated first subscription message from the first further node in response to the second notification, the updated first subscription message comprising data indicating one or more updated first network events of which the first further node should be notified; determining, by the charging subscription determiner, the updated first network events the first further node should be notified of from the received updated first subscription message; and determining, by the subscription message determiner, an updated second subscription message comprising data indicating the updated first network events of which the first further node should be notified and controlling a transmitter to transmit the updated second subscription message to the second further node.

Optionally, the method further comprises the receiver receiving from the first further node, data indicating that a third further node should request updated charging information for the user equipment; and controlling, by a subscription manager, the transmitter to transmit an instruction to the third further node for use as a Packet Data Network Gateway to request the updated charging information from the first further node.

According to the invention in another aspect, there is provided a computer program comprising instructions which, when executed on at least one processor, cause the at least one processor to carry out the method above.

According to the invention in another aspect, there is provided a carrier containing the computer program above, wherein the carrier is one of an electronic signal, optical signal, radio signal, or non-transitory computer readable storage medium.

Disclosed herein, to facilitate the understanding of the invention, is a network node for use as a Packet Data Network Gateway in a telecommunications network. The node comprises a receiver configured to receive a first reauthorization message from a first further node for use as a Policy and Charging Rules Function in the telecommunications network, wherein the first reauthorization message comprises data indicating that charging information at a second further node has been updated, the charging information relating to service and/or charging for a user equipment. The node comprises a session authorizer configured to determine a second reauthorization message for requesting the updated charging information and configured to control a transmitter to transmit the second reauthorization message to the second further node. The node comprises the receiver being further configured to receive the updated charging information from the second further node.

Optionally, the first reauthorization message comprises a Gx reauthorization message comprising a session reauthorization indication for the second further node.

Optionally, the second reauthorization message comprises a Gy reauthorization message.

Disclosed herein, to facilitate the understanding of the invention, is a method for operating a network node for use as a Packet Data Network Gateway in a telecommunications network. The method comprises receiving, by a receiver, a first reauthorization message from a first further node for use as a Policy and Charging Rules Function in the telecommunications network, wherein the first reauthorization message comprises data indicating that charging information at a second further node has been updated, the charging information relating to service and/or charging for a user equipment. The method comprises determining, by a session authorizer, a second reauthorization message for requesting the updated charging information. The method comprises transmitting, by a transmitter, the second reauthorization message to the second further node. The method comprises receiving, by the receiver, the updated charging information from the second further node.

### Brief description of drawings

Exemplary embodiments of the invention are described herein with reference to the accompanying drawings, in which:
Figure 1 is a schematic diagram of a PCC architecture of a telecommunications network;
Figure 2 is a schematic diagram of an architecture of a telecommunications network;
Figure 3 is a schematic diagram of interfaces used in the architecture of Figure 2;
Figure 4 is a signalling diagram showing an initial attach procedure;
Figure 5 is a signalling diagram showing receipt of access network updates by an OCS;
Figure 6 is a schematic diagram of an architecture of a telecommunications network;
Figure 7 is a schematic diagram of an OCS;
Figure 8 is a schematic diagram of an PCRF;
Figure 9 is a schematic diagram of an PDN-Gw;
Figure 10 is a signalling diagram showing an initial attach procedure;
Figure 11 is a signalling diagram showing a session modification procedure;
Figure 12 is a flow diagram of a method for operating a node for use in the OCS; and
Figures 13a and 13b show a flow diagram for an exemplary method for operating a PCRF.

### Detailed description

Generally, methods and apparatus disclosed herein provide a mechanism to apply signaling optimization in scenarios where the OCS 110 requires information about access network information changes.

Leveraging in the Sx interface proposed by the patent application WO 2013/053896 A1 and in the existing 3GPP interface between the PCRF 100 and OCS 110, the Sy interface, a mechanism is disclosed wherein the OCS 110 subscribes to access network event triggers in the PCRF 100, which upon reception of access network information from the MME-SGSN 112 via the Sx interface, will report these changes to the OCS 110.

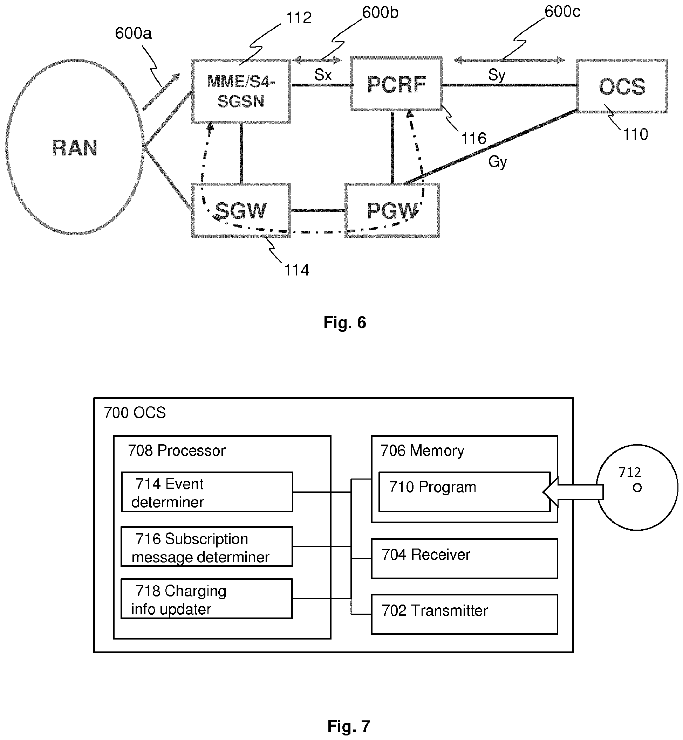

Figure 6 shows an architecture of a telecommunications system and a signaling flow in is shown by the arrows. In dashed line it can be seen the traditional signaling path according to 3GPP.

In exemplary methods and apparatus, the OCS 110 will inform the PCRF 100 about the events of which it wants to be informed by downloading corresponding event triggers to the PCRF 100.

The PCRF 100 will inform the MME/S4-SGSN about the events it wants to be informed of, comprising those events that are relevant for policy decisions plus those events the OCS 110 is interested in being informed of. Alternatively, the PCRF may separately inform the MME/S4-SGSN about events relevant for policy decisions and events that the OCS is interested in being informed of.

The PCRF 100, upon reception of information changes from the MME/SGGN 112, will propagate to the OCS 110 only the information the OCS 110 has previously subscribed for notifications of from the PCRF 100.

Note that PCRF 100 and OCS 110 may be interested in the same access network information or in different type of information. Exemplary situations are provided in Table 1 and help to illustrate the situation:

| **Example** | **Consequence** | **PCRF actions** | **OCS actions** | **Result** |
|---|---|---|---|---|
| A subscriber is subscribed to certain data plan that gives different QoS and also different tariff at certain locations. | Both OCS and PCRF are interested in location changes. | PCRF subscribes via Sx to location changes in the MME/SGSN | OCS subscribes via Sy to location changes in the PCRF | When the MME/SGSN receives from the RADIO a location update, sends the location to the PCRF, who also propagates this information to the OCS. Both OCS and PCRF will consider the new location information to calculate policies and tariff . |
| A subscriber is subscribed to certain data plan that gives different QoS at certain locations but tariff is not affected. | Only the PCRF is interested in location changes. | PCRF subscribes via Sx to location changes in the MME/SGSN | - | When the MME/SGSN receives from the RADIO a location update, sends the location to the PCRF. PCRF does not propagate this information to the OCS |
| A subscriber has different tariff depending on roaming or home traffic. | Only the OCS is interested in roaming information. | PCRF subscribes via Sx to PLMN-Id changes. | OCS subscribes via Sx to PLMN-Id changes. | When the MME/SGSN received from the RADIO a PLMN change, sends the PLMN to the PCRF and the PCRF to the OCS. Only the OCS will take into consideration this information for tariff change. |

Figure 7 shows a schematic diagram of a network node 700. The network node 700 may be used in the OCS 110.

The node 700 comprises a transmitter 702 and a receiver 704. The transmitter 702 and receiver 704 are in electrical communication with other communication units, nodes, UEs, servers and/or functions in a telecommunications network and are configured to transmit and receive data accordingly.

It is noted that the term "electrical communication" encompasses both wired and wireless electrical communication. Therefore, electrical communication may be, for example, a network communication over a wired connection or a network communication of over a radio frequency connection.

The node 700 further comprises at least one memory 706 and at least one processor processor 708. The memory 706 may comprise a non-volatile memory and/or a volatile memory. The memory 706 may have a computer program 710 stored therein. The computer program 710 may be configured to undertake the methods disclosed herein. The computer program 710 may be loaded in the memory 706 from a non-transitory computer readable medium 712, on which the computer program is stored. The processor 708 is configured to undertake at least the functions of an event determiner 714, a subscription message determiner 716 and a charging information updater 718, as set out herein.

Each of the transmitter 702 and receiver 704, memory 706, processor 708, event determiner 714, subscription message determiner 716 and charging information updater 718 is in electrical communication with the other features of the node 700. The node 700 can be implemented as a combination of computer hardware and software. In particular, the event determiner 714, subscription message determiner 716 and charging information updater 718 may be implemented as software configured to run on the processor 708. The at least one memory 706 stores the various programs/executable files that are implemented by a processor 708, and also provides a storage unit for any required data. The programs/executable files stored in the memory 706, and implemented by the processor 708, can include the event determiner 714, subscription message determiner 716 and charging information updater 718, but are not limited to such.

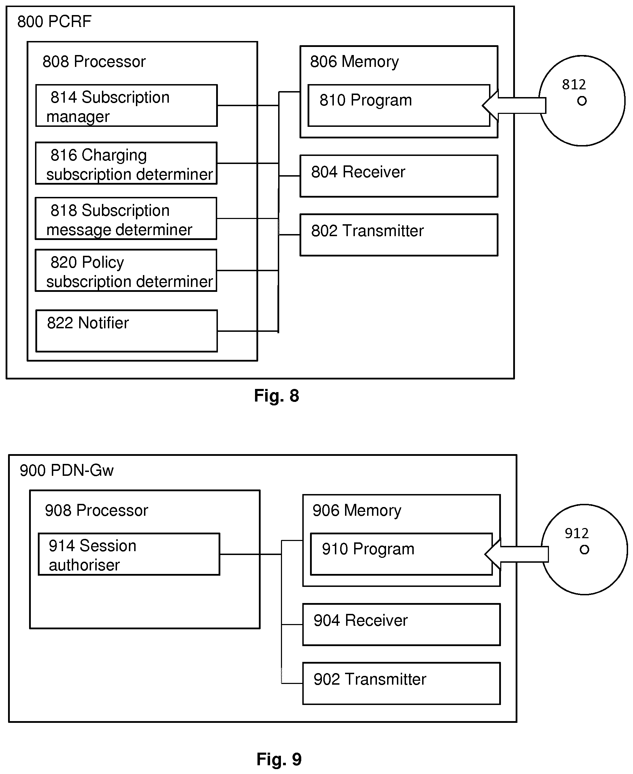

Figure 8 shows a schematic diagram of a network node (800). The network node (800) may be, or may implement, a PCRF 100.

The node 800 comprises a transmitter 802 and a receiver 804. The transmitter 802 and receiver 804 are in electrical communication with other communication units, nodes, UEs, servers and/or functions in a telecommunications network and are configured to transmit and receive data accordingly.

The node 800 further comprises at least one memory 806 and at least one processor 808. The memory 806 may comprise a non-volatile memory and/or a volatile memory. The memory 806 may have a computer program 810 stored therein. The computer program 810 may be configured to undertake the methods disclosed herein. The computer program 810 may be loaded in the memory 806 from a non-transitory computer readable medium 812, on which the computer program is stored. The processor 808 is configured to undertake at least the functions of a subscription manager 814, a charging subscription determiner 816, a subscription message determiner 818, a policy subscription determiner 820 and a notifier 822, as set out herein.

Each of the transmitter 802 and receiver 804, memory 806, processor 808, subscription manager 814, charging subscription determiner 816, subscription message determiner 818, policy subscription determiner 820 and notifier 822 is in electrical communication with the other features of the node 800. The node 800 can be implemented as a combination of computer hardware and software. In particular, the subscription manager 814, charging subscription determiner 816, subscription message determiner 818, policy subscription determiner 820 and notifier 822 may be implemented as software configured to run on the processor 808. The at least one memory 806 stores the various programs/executable files that are implemented by a processor 808, and also provides a storage unit for any required data. The programs/executable files stored in the memory 806, and implemented by the processor 808, can include the subscription manager 814, charging subscription determiner 816, subscription message determiner 818, policy subscription determiner 820 and notifier 822, but are not limited to such.

Figure 9 shows a schematic diagram of a network node (900). The network node (900) may be a PDN-Gw 116. The PDN GW 116 provides connectivity to the UE to external packet data networks and, for example, the PDN GW 116 may perform policy enforcement, packet filtering for each user, charging support, lawful Interception and packet screening.

The node 900 comprises a transmitter 902 and a receiver 904. The transmitter 902 and receiver 904 are in electrical communication with other communication units, nodes, UEs, servers and/or functions in a telecommunications network and are configured to transmit and receive data accordingly.

The node 900 further comprises at least one memory 906 and at least one processor 908. The memory 906 may comprise a non-volatile memory and/or a volatile memory. The memory 906 may have a computer program 910 stored therein. The computer program 910 may be configured to undertake the methods disclosed herein. The computer program 910 may be loaded in the memory 906 from a non-transitory computer readable medium 912, on which the computer program is stored. The processor 908 is configured to undertake at least the functions of a session authorizer 914, as set out herein.

Each of the transmitter 902 and receiver 904, memory 906, processor 908, and session authorizer 914 is in electrical communication with the other features of the node 900. The node 900 can be implemented as a combination of computer hardware and software. In particular, the session authorizer 914 may be implemented as software configured to run on the processor 908. The at least one memory 906 stores the various programs/executable files that are implemented by a processor 908, and also provides a storage unit for any required data. The programs/executable files stored in the memory 906, and implemented by the processor 908, can include the session authorizer 914, but are not limited to such.

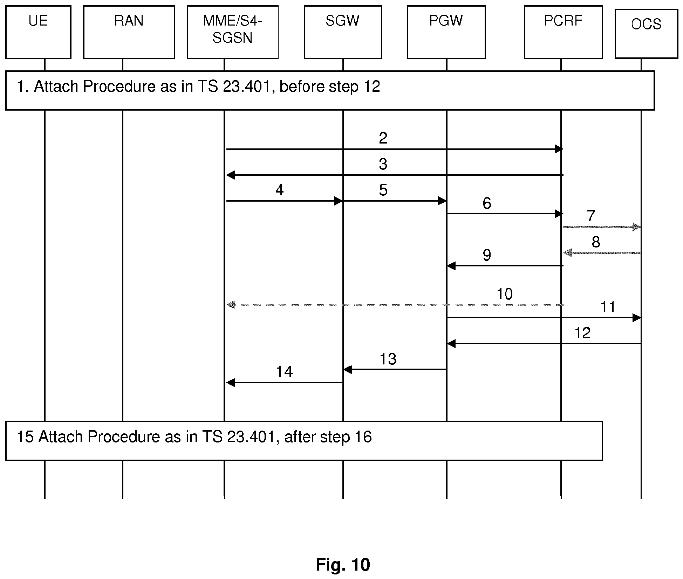

Figure 10 is a signaling diagram showing steps of an exemplary method. Figure 10 shows amendments to the Initial Attach procedure specified in 3GPP TS 23.401. Referring to Figure 10:
1. Initial Attach is initiated as specified up to step 12 in 3GPP TS 23.401
2. The MME/S4-SGSN 112 initiates an Sx session towards the PCRF 100 and includes at least the UE Identity, PDN Identifier and APN.
3. The PCRF 100 acknowledges the MME/S4-SGSN 112 request. In this step there are two possible alternatives:
   a. The policy subscription determiner 820 and the subscription message determiner 818 of the PCRF 100 may subscribe to event notifications from the MME/S4-SGSN 112 that the PCRF needs to make policy control decisions, e.g. changes to cell-id or any other information that is available in the MME/S4-SGSN 112 for this UE.
   b. The PCRF 100 does not send any subscription messages to the MME/S4-SGSN 112 at this point, but waits until step 10 to subscribe to network events at the MME/S4-SGSN 112 that are need by the PCRF 100 to make policy control decisions and by the OCS 110 to update charging information.
4. The MME/S4-SGSN 112 sends a Create Session Request as per normal procedures.
5. The SGw 114 sends a Create Session Request as per normal procedures.
6. The PDN-Gw 116 initiates a new Gx session as per normal procedures. The PCRF 100 correlates the Gx session with the Session Request from the MME/S4-SGSN 112.
7. The PCRF 100 initiates a new Sy session as per normal procedures. At this point the PCRF 100 already can send to the OCS 110 the access network information received.
8. The OCS 110 responds to the Sy session request. The response may include event triggers determined by the event determiner 714 and be sent in a subscription message formed by the subscription message determiner 716. The determined events may be based on the access network information changes of which the OCS 110 is interested in being informed.
9. The PCRF 100 responds to the Gx session request from the PDN-Gw 116 as per normal procedures. Note that PCRF 100 need not subscribe to access network information related event triggers in the PDN-Gw 116 since this information, like for example location information, may be received directly from the MME/S4-SGSN 112 via the Sx interface.
10. There are two alternatives in this step:
   a. The charging subscription determiner 816 and the subscription message determiner 818 of the PCRF 100 may send a subscription message to the MME/S4-SGSN 112 to modify the list of network event triggers that previously the PCRF 100 had sent in step 3, adding new charging related events received from the OCS 110 in the Sy response.
   b. In the case that in step 3 the PCRF 100 sent no network event triggers to the MME/S4-SGSN 112, the charging subscription determiner 816, the policy sub scription determiner 820 and the subscription message determiner 818 of the PCRF 100 sends the whole list of network event triggers to the MME/S4-SGSN 112 containing network events of interest for the PCRF 100 and for the OCS 110.
11. The PDN-Gw 116 sends a Gy Create Session Request to the OCS 110 as per normal procedures.
12. The OCS 110 sends to the PDN-Gw a Gy Create Session Response as per normal procedures. In this answer the OCS 110 does not need to arm event triggers since the OCS 110 has already subscribed to events in the PCRF 100 in step 8.
13. The PDN-Gw 116 sends a Create Session Response to the SGw 114 as per normal procedures.
14. The SGw 114 sends a Create Session Response to the MME/S4-SGSN 112 as per normal procedures.
15. The attach procedure continues as per 3GPP TS 23.401 after step 16 in that document. Any personalized parameters provided to the MME/S4-SGSN 112 from the PCRF 100 are applied and used internally in the MME/S4-SGSN 112 and in successive procedures of relevance.

The methods and apparatus disclosed may implement one or more of the following changes to the initial attachment procedure discussed in background section and shown in Figure 4. Other changes may also be included in exemplary methods and apparatus.

In step 7 of Figure 10, the PCRF 100 already informs the OCS 110 about access network information. This allows the OCS 110 to consider already at this point the access network information to decide the counters status. Compared with procedure of **Error! Reference source not found.**, the reauthorization from steps 15 to 21 of that figure is avoided. In step 8 of Figure 10, the OCS 110 subscribes to event triggers in the PCRF 100. In step 10 of Figure 10, the PCRF 100 may reauthorize, if necessary, the Sx session including the new event triggers that have been received from OCS 110. In step 12 of Figure 10, the OCS 110 need not subscribe to event triggers in the PDN-Gw 116 since already is subscribed in the PCRF 100.

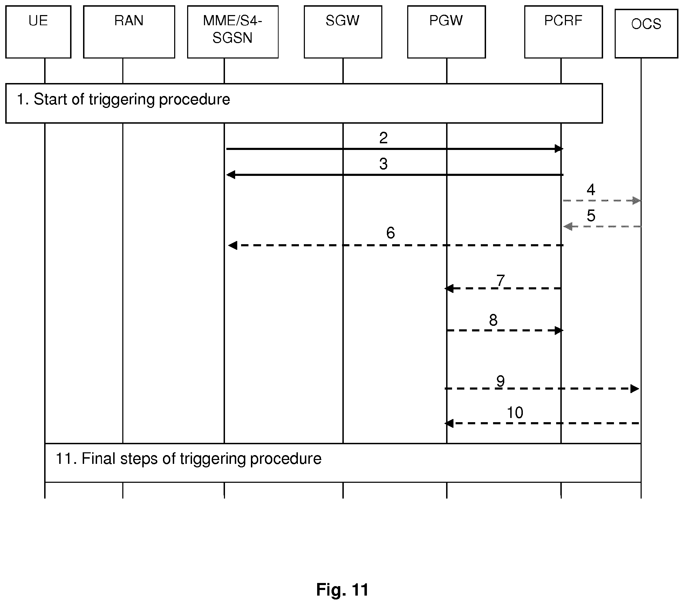

Figure 11 is a signaling diagram showing an exemplary method based on the session modification procedure as specified in 3GPP TS 23.401. Referring to Figure 11:
1. A network event occurs at the MME/S4-SGSN 112 that matches a network event that the PCRF has subscribed to, e.g. cell-id change or RAT-Type change. The event may be triggered e.g. by a TAU or RAU procedure or by a handover procedure. Other events are possible.
2. The MME/S4-SGSN 112 initiates an intermediate request (or first notification) towards the PCRF 100 and may include updated access network information based on the network event.
3. The PCRF 100 acknowledges the MME/S4-SGSN 112 request. At this point the PCRF 100 may change the network events to which it is subscribed and provide new or additional personalized parameters to be used by the MME/S4-SGSN 112 for this UE and connection. As an alternative, the PCRF 100 may postpone this information until step 6 of Figure 11.
4. The PCRF 100 may send a further notification to the OCS 110 comprising information from the first notification, or at least part of it, if the OCS 110 has previously subscribed to notifications of the network events contained in the notification.
5. The OCS 110 acknowledges the PCRF 100 request and may at this point make changes to the network events to which it is subscribed. The OCS 110 may include an indication indicating that the PDN-Gw 116 shall ask for new charging information, e.g., in the case that the new access network information means any change in the charging policies in the PDN-Gw 116.
6. The PCRF 100 may change the subscription to notifications and provide new or additional personalized parameters to be used by the MME/S4-SGSN 112 for this UE and connection:
   a. The PCRF 100 may modify in the MME/S4-SGSN 112 the list of event triggers that previously the PCRF 100 had sent in step 3, according to the information received from the OCS 110 in the Sy response.
   b. In the case that in step 3 the PCRF 100 sent no event triggers to the MME/S4-SGSN 112, the PCRF 100 may modify in the MME/S4-SGSN 112 the existing list of event triggers, according to updated requirements of the PCRF 100 and the updated information received from the OCS 110 in the Sy response.
7. If the new access network information (based on the network events that have occurred) received in the PCRF 100 from the MME/S4-SGSN 112 changes any of the PCRF 100 policies applicable in the PDN-Gw 116, the PCRF 100 sends a Gx reauthorization message to the PDN-Gw 116 with the new policies. The PCRF 100 will also send a Gx reauthorization message to the PDN-Gw 116 if the OCS 110 has indicated in step 5 that the PDN-Gw 116 is required to reauthorize the Gy session towards the OCS 110. In this last case, the Gx reauthorization message will contain an OCS 110 session reauthorization indication.
8. Associated with step 7, the PDN-Gw 116 will answer the Gx reauthorization message.
9. If the PCRF 100 has informed the PDN-Gw 116 that a Gy session towards OCS 110 shall be reauthorized then the PDN-Gw will send a Gy reauthorization message to the OCS. The PDN-Gw 116 sends to the OCS 110 a request reporting the quotas.
10. The OCS 110 sends to the PDN-Gw 116 the new charging information.
11. Final steps of the triggering procedure as set out in 3GPP TS 23.401 (if applicable).

Steps 4 and 5 of Figure 11 are optional, depending on whether the information received from MME/S4-SGSN 112 is of interest to the OCS 110 or not. Further, steps 9 and 10 are optional. If the information sent by the PCRF 100 to the OCS 110 does not imply any charging change, the Gy session between OCS 110 and PDN-Gw 116 does not need to be reauthorized. Further, steps 7 and 8 are optional. If the information received in the PCRF 100 does not imply any policy change and the OCS 110 has not sent to the PCRF 100 a Gy session reauthorization indication, the PCRF 100 does not need to send a Gx reauthorization message to the PDN-Gw 116.

Comparing the steps in Figure 11 with those in Figure 5 shows an advantage of the exemplary methods and apparatus disclosed herein. In summary, the SGw 114 and the PDN-Gw 116 are not unnecessarily affected by the signaling produced by access network information changes.

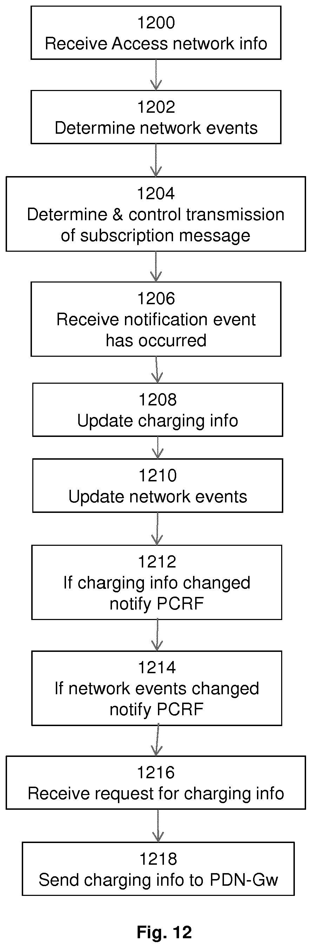

Figure 12 shows a flow diagram of a method for operating a node 700 for use in the OCS 110. It should be understood that one or more steps in Figure 12 are optional.

The receiver 704 of the OCS may first receive 1200 access network information from the PCRF 100. The access network information may be used by the event determiner 714 to determine 1202 network events that the node 700 should be notified of, that is, network event notifications that the node 700 should subscribe to in the PCRF 100. The subscription message determiner 716 determines 1204 a subscription message and controls the transmitter 702 to transmit the subscription message to the PCRF 100.

When one of the determined network events occurs, the receiver 704 receives 1206 from the PCRF 100 a notification to that effect. The charging information updater 718 updates 1208 the charging information stored in the OCS 110 accordingly. In addition, the event determiner 714 also updates 1210 the network events for which notifications should be received. It is noted that updating the charging information and the network events encompasses making no change to the charging information and the network events, if the network event that has occurred does not require it.

The charging information updater 718 determines 1212 whether the charging information has changed and, if it has, controls the transmitter 702 to send a message notifying the PCRF 100 of that change. The event determiner 714 determines 1214 whether the network events have changed and, if they have, controls the transmitter 702 to send a message notifying the PCRF 100 of that change. If the PCRF has been notified of a change in charging information, the receiver 704 will receive 1216 a request for the updated charging information from the PDN-Gw 116. The charging information updater 718 controls the transmitter 702 to transmit 1218 the updated charging information to the PDN-Gw 116.

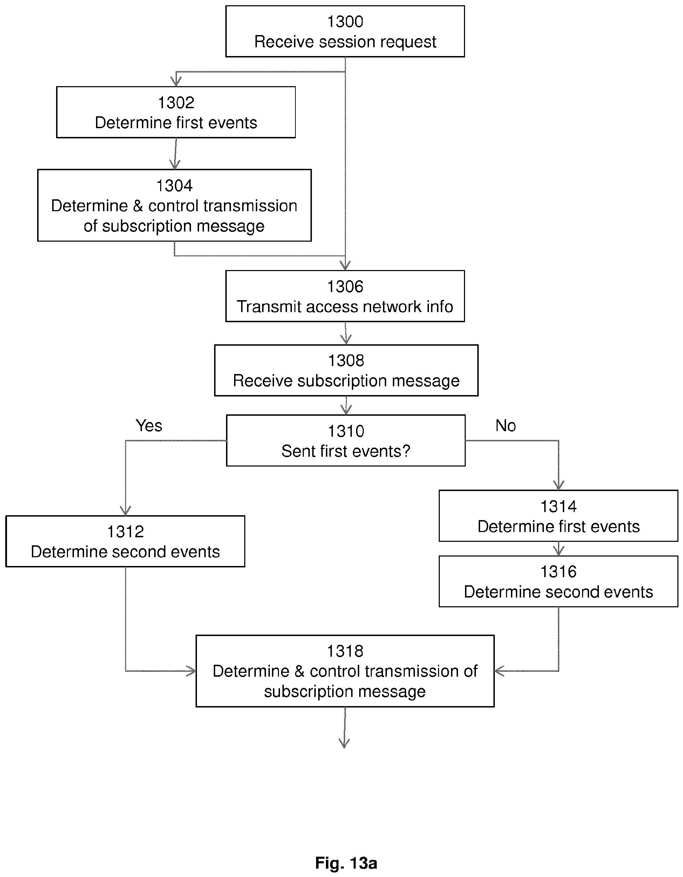

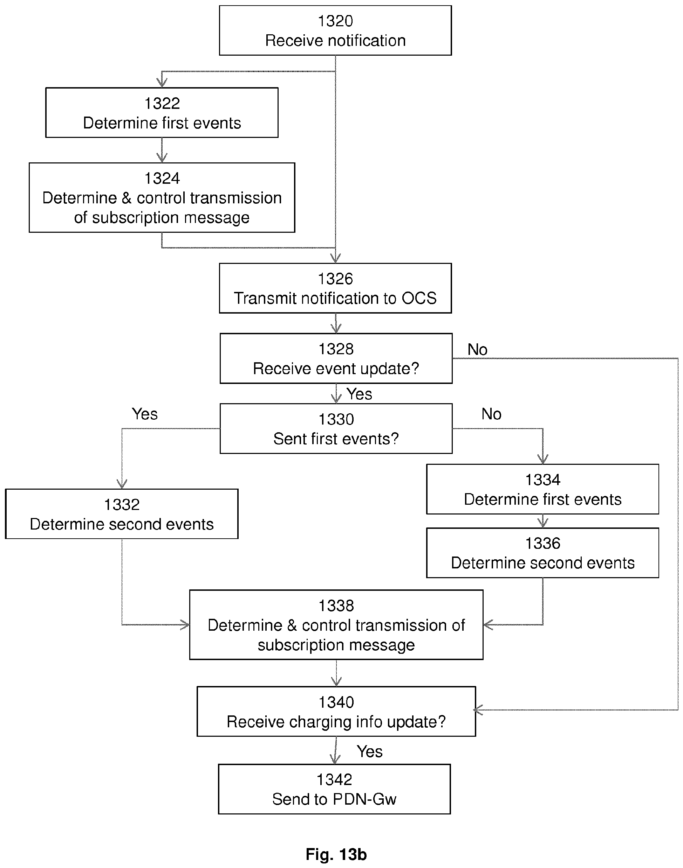

Figures 13a and 13b show a flow diagram for an exemplary method for operating a PCRF 100. It should be understood that one or more steps in Figures 13a and 13b are optional.

The MME/S4-SGSB 112 sends an Sx session request to the PCRF 100, where it is received 1300 at the receiver 804. From step 1300, there are two options: the policy subscription determiner 820 determines 1302 first events of which the PCRF 100 is to be notified and the subscription message determiner 818 determines a first subscription message and controls the transmitter 802 to transmit 1304 the first subscription message to the MME/S4-SGSN 112; or the PCRF 100 transmits no first subscription message to the MME/S4-SGSN 112. The first events may be events that affect policy decisions in the network.

At step 1306, the subscription manager 816 transmits access network information to the OCS 110 or, more specifically, to a node 700 in the OCS. The receiver 804 receives 1308 a second subscription message from the OCS 110.

The second subscription message comprises data indicating the network events that the OCS 110 should be notified of. By way of the second subscription message, the OCS 110 subscribes to notifications of network events from the MME/S4-SGSN 112 via the PCRF 100.

The subscription manager 814 determines 1310 whether the PCRF 100 has already sent a first subscription message to the MME/S4-SGSN 112. If a first subscription message has been sent, the charging subscription determiner 816 determines 1312 the network events to which the OCS 110 wishes to subscribe based on the received second subscription message. If no first subscription message has been sent, the charging subscription determiner 816 determines 1314 the network events to which the OCS 110 wishes to subscribe based on the received second subscription message and the policy subscription determiner 820 determines 1316 the first network events to which the PCRF 100 wishes to subscribe.

The subscription message determiner 818 determines 1318 a subscription message and controls the transmitter 802 to transmit the subscription message to the MME/S4-SGSN 112. The subscription message may comprise second network event data and/or first and second network event data based on whether a first subscription message has already been sent. If only second network event data is included in the subscription message, the subscription message simply updates the first network event data already held at the MME/S4-SGSN 112 to which the PCRF 100 has subscribed to include the second network event data.

After a network event included in the subscription message(s) sent from the PCRF 100 to the MME/S4-SGSN 112 has occurred, the PCRF 100 receives 1320 a notification from the MME/S4-SGSN 112.

The notification may comprise updated access network information. At this point, there are two options: the policy subscription determiner 820 determines 1322 the first events of which the PCRF 100 is to be notified, based on the received notification and the subscription message determiner 818 determines an updated first subscription message and controls the transmitter 802 to transmit 1324 the updated first subscription message to the MME/S4-SGSN 112; or the PCRF 100 transmits no updated first subscription message to the MME/S4-SGSN 112.

At step 1326, the notifier 822 may control the transmitter 802 to transmit at least part of the notification to the OCS 110 or, more specifically, to a node 700 in the OCS 110. Step 1326 may only occur if the notification received at the PCRF 100 involved a network event to which the OCS 110 is subscribed. The at least part of the notification comprises data relating to a network event to which the OCS 110 is subscribed.

In response to the transmission of the at least part of the notification to the OCS 110, the PCRF 100 may receive 1328 an updated second subscription message from the OCS 110 comprising updated network events to which the OCS 110 wishes to subscribe.

If no updated subscription message is received, the method may proceed to step 1340, which is discussed later. If an updated subscription message is received, the subscription manager 814 determines 1330 whether the PCRF 100 has already sent a first subscription message to the MME/S4-SGSN 112 following receipt of the notification in step 1320. If a first subscription message has been sent, the charging subscription determiner 816 determines 1332 the second network events to which the OCS 110 wishes to subscribe based on the received updated second subscription message. If no first subscription message has been sent, the charging subscription determiner 816 determines 1334 the second network events to which the OCS 110 wishes to subscribe based on the received updated second subscription message and the policy subscription determiner 820 determines 1336 the first network events to which the PCRF 100 wishes to subscribe.

The subscription message determiner 818 determines 1338 an updated subscription message and controls the transmitter 802 to transmit the subscription message to the MME/S4-SGSN 112. The subscription message may comprise second network event data and/or first and charging network event data based on whether a first subscription message has already been sent. If only second network event data is included in the subscription message, the subscription message simply updates the first network event data already held at the MME/S4-SGSN 112 to which the PCRF 100 has subscribed to include the second network event data.

At step 1340, the subscription manager 814 determines whether a charging information update has been received from the OCS 110. If a charging information update has been received, the subscription manager 814 controls the transmitter 802 to transmit 1342 an instruction to the PDN-Gw 116 to request updated charging information from the OCS 110.

The Sx interface has already been defined to convey access network information. For this purpose, the Sx has been defined with same AVPs as the 3GPP Gx interface. For example, to convey location information it has been reused the same AVP as in Gx, 3GPP-Location-lnformation AVP:
[3GPP-MS-TimeZone]
[3GPP-RAT-Type]
[3GPP-SGSN-MCC-MNC]
[3GPP-SGSN-Address]
[3GPP-SGSN-I Pv6-Address]
[3GPP-User -Location-Info]
[IP-CAN-Type]

In exemplary methods and apparatus, the Sy interface may be extended to convey:
- in the SLR message the access network information. It is proposed to use the same AVPs as in Gx/Gy interfaces:
   [3GPP-MS-TimeZone]
   [3GPP-RAT-Type]
   [3GPP-SGSN-MCC-MNC]
   [3GPP-SGSN-Address]
   [3GPP-SGSN-IPv6-Address]
   [3GPP-User-Location-Info]
   [IP-CAN-Type]
- In the SLA message it is added AVPs to subscribe to event triggers. It is proposed to reuse the same AVPs that those defined for this purpose in Gx.
   *[Event-Trigger] as specified in 29.212
- In the SLA message it is added an AVP to indicate Gy session reauthorization required:
- Gy-Reauthorization-Required:
   Gy-Reauthorization-Required ::= < AVP Header:,Vendor Id: > *{Gy-Session-Id}

In exemplary methods and apparatus, for the Gx interface, a new indication has been defined in the RAR message to indicate to the PDN-Gw 116 that the OCS 110 is expecting to receive a Gy reauthorization message from the PDN-Gw 116. More than one Gy session may be required to be reauthorized.
Gy-Reauthorization-Required ::= < AVP Header:,Vendor Id: > *{Gy-Session-Id}

In exemplary methods and apparatus, the PCRF 100 may support the subscription of OCS to access network information changes. The PCRF 100 may be capable to send to the OCS 110 access network information according to the network events subscribed by the OCS 110. The PCRF 100 may be able to send a Gx reauthorization message towards the PDN-Gw 116 if new policies are required or if the OCS 110 has sent a Gy reauthorization indication.

In exemplary methods and apparatus, the OCS 110 may be able to receive in an Sy message the access network information to be considered for charging purposes. The OCS 110 may be able to subscribe to access network events in the PCRF 100. The OCS 110 may be able to include in the Sy answer to the PCRF 100 the indication of Gy reauthorization required.

In exemplary methods and apparatus, the PDN-Gw 116 shall support the new AVP Gy-Reauthorization-Required message and initiate a Gy session reauthorization accordingly. More than one session may be required to be reauthorized.

Methods and apparatus disclosed herein propose significant optimized signaling procedures from the RADIO to the CN. Methods and apparatus disclosed herein avoid the overloading of the SGw 114 and the PDN-Gw 116 due to high frequency access network information changes, like for example cell location. Methods and apparatus disclosed herein consolidate network access information through a single signaling path. Methods and apparatus disclosed herein avoid reauthorization procedures that can be unnecessarily produced immediately after an initial attach. Methods and apparatus disclosed herein optimize initial attach and PDN connection modification procedures.

A computer program may be configured to provide any of the above described methods. The computer program may be provided on a computer readable medium. The computer program may be a computer program product. The product may comprise a non-transitory computer usable storage medium. The computer program product may have computer-readable program code embodied in the medium configured to perform the method. The computer program product may be configured to cause at least one processor to perform some or all of the method.

Various methods and apparatus are described herein with reference to block diagrams or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

Computer program instructions may also be stored in a computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/Blu-ray).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks.

Accordingly, the invention may be embodied in hardware and/or in software (including firmware, resident software, micro-code, etc.) that runs on a processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated.

## Claims

1. A network node (800) for use as a Policy and Charging Rules Function (100) in a telecommunications network, the node comprising:
a receiver (804) configured to receive a first subscription message from a first further node (700) for use in an online charging system (110), wherein the first subscription message comprises data indicating one or more first network events of which the first further node should be notified;
a charging subscription determiner (816) configured to determine the first network events the first further node should be notified of from the received first subscription message;
a subscription message determiner (818) configured to determine a second subscription message comprising data indicating the first network events of which the first further node should be notified, and further configured to control a transmitter (802) to transmit the second subscription message to a second further node for use as a Mobility Management Entity/Serving General Packet Radio Service Support Node (112),
wherein the receiver is further configured to receive from the second further node a first notification indicating that at least one of the one or more first network events has occurred,
the network node (800) further comprising a notifier (822) configured to control the transmitter (802) to transmit to the first further node a second notification indicating that the at least one of the one or more first network events has occurred, according to the indication in the first notification.

2. A network node (800) according to claim 1, wherein the transmitter (802) is further configured to transmit network information relating to a user equipment in the telecommunications network to the first further node (700).

3. A network node (800) according to claim 1 or 2 further comprising a policy subscription determiner (820) configured to determine one or more second network events of which the node (800) should be notified.

4. A network node (800) according to claim 3, wherein the subscription message determiner (818) is configured to determine a third subscription message comprising data indicating the second network events of which the node should be notified and further configured to control a transmitter (802) to transmit the third subscription message to the second further node (112).

5. A network node (800) according to claim 3, wherein the second subscription message further comprises data indicating the second network events of which the node should be notified.

6. A network node (800) according to claim 3, wherein the policy subscription determiner (820) is configured to update the one or more second network events based on the first notification received from the second further node.

7. A network node (800) according to any of claims 1 to 6, wherein the receiver is further configured to receive an updated first subscription message from the first further node (700) in response to the second notification, the updated first subscription message comprising data indicating one or more updated first network events of which the first further node should be notified,
and wherein the charging subscription determiner (816) is configured to determine the updated first network events the first further node should be notified of from the received updated first subscription message, and the subscription message determiner (818) is configured to determine an updated second subscription message comprising data indicating the updated first network events of which the first further node should be notified and further configured to control a transmitter (802) to transmit the updated second subscription message to the second further node (112).

8. A network node (800) according to any of claims 1 to 7, wherein the receiver is further configured to receive from the first further node (700) data indicating that a third further node (900) should request updated charging information for the user equipment,
the node (800) further comprising a subscription manager (814) configured to control the transmitter (802) to transmit an instruction to a third further node (900) for use as a Packet Data Network Gateway (116) to request the updated charging information from the first further node (700).

9. A method for operating a network node (800) for use as a Policy and Charging Rules Function (100) in a telecommunications network, the method comprising:
receiving (1308), by a receiver (804), a first subscription message from a first further node (700) for use in an online charging system (110), wherein the first subscription message comprises data indicating one or more first network events of which the first further node (700) should be notified;
determining (1312, 1316), by a charging subscription determiner (816), the first network events the first further node should be notified of from the received first subscription message;
determining (1318), by a subscription message determiner (818), a second subscription message comprising data indicating the first network events of which the first further node (700) should be notified and controlling a transmitter (802) to transmit the second subscription message to a second further node for use as a Mobility Management Entity/Serving General Packet Radio Service Support Node (112) ;
receiving (1320), by the receiver, from the second further node (112) a first notification indicating that at least one of the one or more first network events has occurred; and
controlling (1326), by a notifier (818), the transmitter to transmit to the first further node (700) a second notification indicating that the at least one of the one or more first network events has occurred, according to the indication in the first notification.

10. A method according to claim 9, further comprising the transmitter (802) transmitting (1320) network information relating to a user equipment in the telecommunications network to the first further node (700).

11. A method according to claim 9 or 10, further comprising determining (1302, 1314), by a policy subscription determiner (820), one or more second network events of which the node (800) should be notified.

12. A method according to claim 11, further comprising the subscription message determiner (818) determining (1318) a third subscription message comprising data indicating the second network events of which the node (800) should be notified and controlling a transmitter (802) to transmit the third subscription message to the second further node (112).

13. A method according to claim 11, further comprising the policy subscription determiner (820) updating (1322, 1334) the one or more second network events based on the first notification received from the second further node (112).

14. A method according to any of claims 9 to 13, further comprising receiving (1328), by the receiver (804), an updated first subscription message from the first further node (700) in response to the second notification, the updated first subscription message comprising data indicating one or more updated first network events of which the first further node should be notified;
determining (1332, 1334), by the charging subscription determiner (816), the updated first network events the first further node (700) should be notified of from the received updated first subscription message; and
determining (1338), by the subscription message determiner (818) an updated second subscription message comprising data indicating the updated first network events of which the first further node should be notified and controlling a transmitter (802) to transmit the updated second subscription message to the second further node (112).

15. A carrier (812) containing a computer program (810) comprising instructions which, when executed on at least one processor, cause the at least one processor to carry out the method according to any one of claims 9 to 14, wherein the carrier is one of an electronic signal, optical signal, radio signal, or non-transitory computer readable storage medium.

## Patentansprüche

1. Netzwerkknoten (800) zur Verwendung als Richtlinien- und Abrechnungsregelfunktion (100) in einem Telekommunikationsnetzwerk, wobei der Knoten umfasst:
einen Empfänger (804), der so konfiguriert ist, dass er eine erste Abonnementnachricht von einem ersten weiteren Knoten (700) zur Verwendung in einem Online-Abrechnungssystem (110) empfängt, wobei die erste Abonnementnachricht Daten umfasst, die ein oder mehrere erste Netzwerkereignisse angeben, von welchen der erste weitere Knoten benachrichtigt werden sollte;
eine Abrechnungsabonnementbestimmungseinheit (816), die so konfiguriert ist, dass sie die ersten Netzwerkereignisse, von welchen der erste weitere Knoten benachrichtigt werden sollte, aus der empfangenen ersten Abonnementnachricht bestimmt;
eine Abonnementnachrichtenbestimmungseinheit (818), die so konfiguriert ist, dass sie eine zweite Abonnementnachricht bestimmt, die Daten umfasst, welche die ersten Netzwerkereignisse angeben, von welchen der erste weitere Knoten benachrichtigt werden sollte, und ferner so konfiguriert ist, dass sie einen Sender (802) zum Senden der zweiten Abonnementnachricht an einen zweiten weiteren Knoten zur Verwendung als Mobilitätsverwaltungsinstanz bzw. versorgenden Unterstützungsknoten des allgemeinen paketvermittelten Funkdienstes sendet,
wobei der Empfänger ferner so konfiguriert ist, dass er vom zweiten weiteren Knoten (112) eine erste Benachrichtigung mit der Angabe empfängt, dass mindestens eines des einen oder der mehreren ersten Netzwerkereignisse eingetreten ist,
der Netzwerkknoten (800) ferner eine Benachrichtigungseinheit (822) umfasst, die so konfiguriert ist, dass sie den Sender (802) zum Senden einer zweiten Benachrichtigung mit der Angabe, dass das mindestens eine des einen oder der mehreren ersten Netzwerkereignisse eingetreten ist, gemäß der Angabe in der ersten Benachrichtigung an den ersten weiteren Knoten steuert.

2. Netzwerkknoten (800) nach Anspruch 1, wobei der Sender (802) ferner zum Senden von Netzwerkinformationen in Bezug auf eine Benutzereinrichtung im Telekommunikationsnetzwerk an den ersten weiteren Knoten (700) konfiguriert ist.

3. Netzwerkknoten (800) nach Anspruch 1 oder 2, ferner umfassend eine Richtlinienabonnementbestimmungseinheit (820), die zum Bestimmen eines oder mehrerer zweiter Netzwerkereignisse konfiguriert ist, von welchen der Knoten (800) benachrichtigt werden sollte.

4. Netzwerkknoten (800) nach Anspruch 3, wobei die Abonnementnachrichtenbestimmungseinheit (818) so konfiguriert ist, dass sie eine dritte Abonnementnachricht bestimmt, die Daten umfasst, welche die zweiten Netzwerkereignisse angeben, von welchen der Knoten benachrichtigt werden sollte, und ferner so konfiguriert ist, dass sie einen Sender (802) zum Senden der dritten Abonnementnachricht an den zweiten weiteren Knoten (112) steuert.

5. Netzwerkknoten (800) nach Anspruch 3, wobei die zweite Abonnementnachricht ferner Daten umfasst, welche die zweiten Netzwerkereignisse angeben, von welchen der Knoten benachrichtigt werden sollte.

6. Netzwerkknoten (800) nach Anspruch 3, wobei die Richtlinienabonnementbestimmungseinheit (820) so konfiguriert ist, dass sie das eine oder die mehreren zweiten Netzwerkereignisse basierend auf der ersten Benachrichtigung, die vom zweiten weiteren Knoten empfangen wird, aktualisiert.

7. Netzwerkknoten (800) nach einem der Ansprüche 1 bis 6, wobei der Empfänger ferner so konfiguriert ist, dass er eine aktualisierte erste Abonnementnachricht vom ersten weiteren Knoten (700) in Reaktion auf die zweite Benachrichtigung empfängt, wobei die aktualisierte erste Abonnementnachricht Daten umfasst, die ein oder mehrere aktualisierte erste Netzwerkereignisse angeben, von welcher der erste weitere Knoten benachrichtigt werden sollte,
und wobei die Abrechnungsabonnementbestimmungseinheit (816) so konfiguriert ist, dass sie die aktualisierten ersten Netzwerkereignisse, von welchen der erste weitere Knoten benachrichtigt werden sollte, aus der empfangenen aktualisierten ersten Abonnementnachricht bestimmt, und die Abonnementnachrichtenbestimmungseinheit (818) so konfiguriert ist, dass sie eine aktualisierte zweite Abonnementnachricht bestimmt, die Daten umfasst, welche die aktualisierten ersten Netzwerkereignisse angeben, von welchen der erste weitere Knoten benachrichtigt werden sollte, und ferner so konfiguriert ist, dass sie einen Sender (802) zum Senden der aktualisierten zweiten Abonnementnachricht an den zweiten weiteren Knoten (112) steuert.

8. Netzwerkknoten (800) nach einem der Ansprüche 1 bis 7, wobei der Empfänger ferner so konfiguriert ist, dass er Daten, die angeben, dass ein dritter weiterer Knoten (900) aktualisierte Abrechnungsinformationen für die Benutzereinrichtung anfordern sollte, vom ersten weiteren Knoten (700) empfängt,
wobei der Knoten (800) ferner eine Abonnementverwaltungseinheit (814) umfasst, die so konfiguriert ist, dass sie den Sender (802) zum Senden einer Anweisung an einen dritten weiteren Knoten (900) zur Verwendung als Paketdatennetzwerk-Gateway (116) zum Anfordern der aktualisierten Abrechnungsinformationen vom ersten weiteren Knoten (700) steuert.

9. Verfahren zum Betreiben eines Netzwerkknotens (800) zur Verwendung als Richtlinien- und Abrechnungsregelfunktion (100) in einem Telekommunikationsnetzwerk, wobei das Verfahren umfasst:
Empfangen (1308) einer ersten Abonnementnachricht durch einen Empfänger (804) von einem ersten weiteren Knoten (700) zur Verwendung in einem Online-Abrechnungssystem (110), wobei die erste Abonnementnachricht Daten umfasst, die ein oder mehrere erste Netzwerkereignisse angeben, von welchen der erste weitere Knoten (700) benachrichtigt werden sollte;
Bestimmen (1312, 1316) der ersten Netzwerkereignisse, von welchen der erste weitere Knoten benachrichtigt werden sollte, durch eine Abrechnungsabonnementbestimmungseinheit (816) aus der empfangenen ersten Abonnementnachricht;
Bestimmen (1318) durch eine Abonnementnachrichtenbestimmungseinheit (818) einer zweiten Abonnementnachricht, die Daten umfasst, welche die ersten Netzwerkereignisse angeben, von welchen der erste weitere Knoten (700) benachrichtigt werden sollte, und Steuern eines Senders (802) zum Senden der zweiten Abonnementnachricht an einen zweiten weiteren Knoten zur Verwendung als Mobilitätsverwaltungsinstanz bzw. versorgenden Unterstützungsknoten des allgemeinen paketvermittelten Funkdienstes (112),
Empfangen (1320) einer ersten Benachrichtigung mit der Angabe, dass mindestens eines des einen oder der mehreren ersten Netzwerkereignisse eingetreten ist, durch den Empfänger vom zweiten weiteren Knoten (112); und
Steuern (1326) des Senders durch eine Benachrichtigungseinheit (818) zum Senden (802) einer zweiten Benachrichtigung mit der Angabe, dass das mindestens eine des einen oder der mehreren ersten Netzwerkereignisse eingetreten ist, gemäß der Angabe in der ersten Benachrichtigung an den ersten weiteren Knoten (700).

10. Verfahren nach Anspruch 9, ferner umfassend, dass der Sender (802) Netzwerkinformationen in Bezug auf eine Benutzereinrichtung im Telekommunikationsnetzwerk an den ersten weiteren Knoten (700) sendet (1320).

11. Verfahren nach Anspruch 9 oder 10, ferner umfassend ein Bestimmen (1302, 1314) eines oder mehrerer zweiter Netzwerkereignisse, von welchen der Knoten (800) benachrichtigt werden sollte, durch eine Richtlinienabonnementbestimmungseinheit (820).

12. Verfahren nach Anspruch 11, ferner umfassend, dass die Abonnementnachrichtenbestimmungseinheit (818) eine dritte Abonnementnachricht bestimmt (1318), die Daten umfasst, welche die zweiten Netzwerkereignisse angeben, von welchen der Knoten (800) benachrichtigt werden sollte, und den Sender (802) zum Senden der dritten Abonnementnachricht an den zweiten weiteren Knoten (112) steuert.

13. Verfahren nach Anspruch 11, ferner umfassend, dass die Richtlinienabonnementbestimmungseinheit (820) das eine oder die mehreren zweiten Netzwerkereignisse basierend auf der ersten Benachrichtigung, die vom zweiten weiteren Knoten (112) empfangen wird, aktualisiert (1322, 1334).

14. Verfahren nach einem der Ansprüche 9 bis 13, ferner umfassend ein Empfangen (1328) einer aktualisierten ersten Abonnementnachricht durch den Empfänger (804) vom ersten weiteren Knoten (700) in Reaktion auf die zweite Benachrichtigung, wobei die aktualisierte erste Abonnementnachricht Daten umfasst, die ein oder mehrere aktualisierte erste Netzwerkereignisse angeben, von welcher der erste weitere Knoten benachrichtigt werden sollte,
Bestimmen (1332, 1334) der aktualisierten ersten Netzwerkereignisse, von welchen der erste weitere Knoten benachrichtigt werden (700) sollte, durch die Abrechnungsabonnementbestimmungseinheit (816) aus der empfangenen aktualisierten ersten Abonnementnachricht; und
Bestimmen (1338) durch die Abonnementnachrichtenbestimmungseinheit (818) einer aktualisierten zweiten Abonnementnachricht, die Daten umfasst, welche die aktualisierten ersten Netzwerkereignisse angeben, von welchen der erste weitere Knoten benachrichtigt werden sollte, und Steuern des Senders (802) zum Senden der aktualisierten zweiten Abonnementnachricht an den zweiten weiteren Knoten (112)

15. Datenträger (812), der ein Computerprogramm (810) enthält, das Anweisungen umfasst, die bei Ausführung auf mindestens einem Prozessor den mindestens einen Prozessor zum Durchführen des Verfahrens nach einem der Ansprüche 9 bis 14 veranlassen, wobei der Datenträger eines von einem elektronischen Signal, einem optischen Signal, einem Funksignal oder einem nicht-transitorischen computerlesbaren Speichermedium ist.

## Revendications

1. Noeud de réseau (800) destiné à être utilisé en tant qu'une fonction de règles de facturation et de politique (100) dans un réseau de télécommunications, le noeud comprenant :
un récepteur (804) configuré pour recevoir un premier message d'abonnement en provenance d'un premier autre noeud (700) destiné à être utilisé dans un système de facturation en ligne (110), dans lequel le premier message d'abonnement comprend des données indiquant un ou plusieurs premiers événements de réseau qui doivent être notifiés au premier autre noeud ;
un déterminateur d'abonnement de facturation (816) configuré pour déterminer les premiers événements de réseau qui doivent être notifiés au premier autre noeud à partir du premier message d'abonnement reçu ;
un déterminateur de message d'abonnement (818) configuré pour déterminer un deuxième message d'abonnement comprenant des données indiquant les premiers événements de réseau qui doivent être notifiés au premier autre noeud, et en outre configuré pour commander à un émetteur (802) de transmettre le deuxième message d'abonnement à destination d'un deuxième autre noeud destiné à être utilisé en tant qu'une entité de gestion de mobilité/noeud de prise en charge de service radio par paquet général de desserte (112),
dans lequel le récepteur est en outre configuré pour recevoir, en provenance du deuxième autre noeud, une première notification indiquant qu'au moins l'un de l'un ou plusieurs premiers événements de réseau est survenu,
le noeud de réseau (800) comprenant en outre un notificateur (822) configuré pour commander à l'émetteur (802) de transmettre, à destination du premier autre noeud, une deuxième notification indiquant que l'au moins un de l'un ou plusieurs premiers événements de réseau est survenu, en fonction de l'indication dans la première notification.

2. Noeud de réseau (800) selon la revendication 1, dans lequel l'émetteur (802) est en outre configuré pour transmettre des informations de réseau relatives à un équipement d'utilisateur dans le réseau de télécommunications à destination du premier autre noeud (700) .

3. Noeud de réseau (800) selon la revendication 1 ou 2, comprenant en outre un déterminateur d'abonnement de politique (820) configuré pour déterminer un ou plusieurs deuxièmes événements de réseau qui doivent être notifiés au noeud (800).

4. Noeud de réseau (800) selon la revendication 3, dans lequel le déterminateur de message d'abonnement (818) est configuré pour déterminer un troisième message d'abonnement comprenant des données indiquant les deuxièmes événements de réseau qui doivent être notifiés au noeud et en outre configuré pour commander à un émetteur (802) de transmettre le troisième message d'abonnement à destination du deuxième autre noeud (112) .

5. Noeud de réseau (800) selon la revendication 3, dans lequel le deuxième message d'abonnement comprend en outre des données indiquant les deuxièmes événements de réseau qui doivent être notifiés au noeud.

6. Noeud de réseau (800) selon la revendication 3, dans lequel le déterminateur d'abonnement de politique (820) est configuré pour mettre à jour l'un ou plusieurs deuxièmes événements de réseau sur la base de la première notification reçue en provenance du deuxième autre noeud.

7. Noeud de réseau (800) selon l'une quelconque des revendications 1 à 6, dans lequel le récepteur est en outre configuré pour recevoir un premier message d'abonnement mis à jour en provenance du premier autre noeud (700) en réponse à la deuxième notification, le premier message d'abonnement mis à jour comprenant des données indiquant un ou plusieurs premiers événements de réseau mis à jour qui doivent être notifiés au premier autre noeud,
et dans lequel le déterminateur d'abonnement de facturation (816) est configuré pour déterminer les premiers événements de réseau mis à jour qui doivent être notifiés au premier autre noeud à partir du premier message d'abonnement mis à jour reçu, et le déterminateur de message d'abonnement (818) est configuré pour déterminer un deuxième message d'abonnement mis à jour comprenant des données indiquant les premiers événements de réseau mis à jour qui doivent être notifiés au premier autre noeud et en outre configuré pour commander à un émetteur (802) de transmettre le deuxième message d'abonnement mis à jour à destination du deuxième autre noeud (112).

8. Noeud de réseau (800) selon l'une quelconque des revendications 1 à 7, dans lequel le récepteur est en outre configuré pour recevoir, en provenance du premier autre noeud (700), des données indiquant qu'un troisième autre noeud (900) doit demander des informations de facturation mises à jour pour l'équipement d'utilisateur,
le noeud (800) comprenant en outre un gestionnaire d'abonnement (814) configuré pour commander à l'émetteur (802) de transmettre une instruction à destination d'un troisième autre noeud (900) destiné à être utilisé en tant qu'une passerelle de réseau de données en paquets (116) pour demander les informations de facturation mises à jour au premier autre noeud (700) .

9. Procédé de fonctionnement d'un noeud de réseau (800) destiné à être utilisé en tant qu'une fonction de règles de facturation et de politique (100) dans un réseau de télécommunications, le procédé comprenant :
la réception (1308), par un récepteur (804), d'un premier message d'abonnement en provenance d'un premier autre noeud (700) destiné à être utilisé dans un système de facturation en ligne (110), dans lequel le premier message d'abonnement comprend des données indiquant un ou plusieurs premiers événements de réseau qui doivent être notifiés au premier autre noeud (700) ;
la détermination (1312, 1316), par un déterminateur d'abonnement de facturation (816), des premiers événements de réseau qui doivent être notifiés au premier autre noeud à partir du premier message d'abonnement reçu ;
la détermination (1318), par un déterminateur de message d'abonnement (818), d'un deuxième message d'abonnement comprenant des données indiquant les premiers événements de réseau qui doivent être notifiés au premier autre noeud (700), et la commande à un émetteur (802) de transmettre le deuxième message d'abonnement à destination d'un deuxième autre noeud destiné à être utilisé en tant qu'une entité de gestion de mobilité/noeud de prise en charge de service radio par paquet général de desserte (112) ;
la réception (1320), par le récepteur, en provenance du deuxième autre noeud (112), d'une première notification indiquant qu'au moins l'un de l'un ou plusieurs premiers événements de réseau est survenu ; et
la commande (1326), par un notificateur (818), à l'émetteur (802) de transmettre, à destination du premier autre noeud (700), une deuxième notification indiquant que l'au moins un de l'un ou plusieurs premiers événements de réseau est survenu, en fonction de l'indication dans la première notification.

10. Procédé selon la revendication 9, comprenant en outre la transmission (1320), par l'émetteur (802), d'informations de réseau relatives à un équipement d'utilisateur dans le réseau de télécommunications à destination du premier autre noeud (700).

11. Procédé selon la revendication 9 ou 10, comprenant en outre la détermination (1302, 1314), par un déterminateur d'abonnement de politique (820), d'un ou plusieurs deuxièmes événements de réseau qui doivent être notifiés au noeud (800).

12. Procédé selon la revendication 11, comprenant en outre la détermination (1318), par le déterminateur de message d'abonnement (818), d'un troisième message d'abonnement comprenant des données indiquant les deuxièmes événements de réseau qui doivent être notifiés au noeud (800) et la commande à un émetteur (802) de transmettre le troisième message d'abonnement à destination du deuxième autre noeud (112).

13. Procédé selon la revendication 11, comprenant en outre la mise à jour (1322, 1334), par le déterminateur d'abonnement de politique (820), de l'un ou plusieurs deuxièmes événements de réseau sur la base de la première notification reçue en provenance du deuxième autre noeud (112).

14. Procédé selon l'une quelconque des revendications 9 à 13, comprenant en outre la réception (1328), par le récepteur (804), d'un premier message d'abonnement mis à jour en provenance du premier autre noeud (700) en réponse à la deuxième notification, le premier message d'abonnement mis à jour comprenant des données indiquant un ou plusieurs premiers événements de réseau mis à jour qui doivent être notifiés au premier autre noeud,
la détermination (1332, 1334), par le déterminateur d'abonnement de facturation (816), des premiers événements de réseau mis à jour qui doivent être notifiés au premier autre noeud (700) à partir du premier message d'abonnement mis à jour reçu ; et
la détermination (1338), par le déterminateur de message d'abonnement (818), d'un deuxième message d'abonnement mis à jour comprenant des données indiquant les premiers événements de réseau mis à jour qui doivent être notifiés au premier autre noeud et la commande à un émetteur (802) de transmettre le deuxième message d'abonnement mis à jour à destination du deuxième autre noeud (112).

15. Porteuse (812) contenant un programme informatique (810) comprenant des instructions qui, lorsqu'elles sont exécutées sur au moins un processeur, amènent l'au moins un processeur à effectuer le procédé selon l'une quelconque des revendications 9 à 14, dans laquelle la porteuse est l'un d'un signal électronique, d'un signal optique, d'un signal radio ou d'un support de mémorisation lisible par ordinateur non transitoire.
